# EUROPÄISCHE PATENTANMELDUNG

(11) **EP 3 805 179 A1**
(43) Veröffentlichungstag der Anmeldung: **14.04.2021**
(21) Anmeldenummer: 19202475.0
(22) Anmeldetag: 10.10.2019
(51) Int. Cl.: C04B 26/06, C04B 40/06, C04B 111/00

(54) **MEHRKOMPONENTIGES REAKTIONSHARZSYSTEM UND DESSEN VERWENDUNG**

(71) Anmelder: Hilti Aktiengesellschaft, 9494 Schaan (LI)
(72) Erfinder: Bürgel, Thomas, 86899 Landsberg (DE); Pol, Frederic, 6800 Feldkirch (AT); Jimenez, Cristian, , 201108 (CN)
(74) Vertreter: Hilti Aktiengesellschaft Corporate Intellectual Property

(57) **Zusammenfassung**

Es wird ein mehrkomponentiges Reaktionsharzsystem zur Verwendung mit gewindeformenden Schrauben beschrieben, welches eine aushärtbare Masse enthält, welches insbesondere in einer ersten Komponente mindestens eine radikalisch härtbare Verbindung und einen anorganischen Füllstoff und in einer weiteren zweiten Komponente ein Härtungsmittel für die mindestens eine radikalisch härtbare Verbindung und Wasser enthält, wobei der anorganische Füllstoff hydrophile Eigenschaften aufweist.

## Beschreibung

Die Erfindung betrifft ein mehrkomponentiges Reaktionsharzsystem zur Verwendung mit gewindeformenden Schrauben, welches eine aushärtbare Masse enthält, welches insbesondere in einer ersten Komponente mindestens eine radikalisch härtbare Verbindung und einen anorganischen Füllstoff und in einer weiteren zweiten Komponente ein Härtungsmittel für das mindestens eine radikalisch härtbare Reaktionsharz und Wasser enthält.

Derartige Reaktionsharzsysteme werden für die Befestigung von Befestigungselementen in Bohrlöchern verwendet.

Es sind verschiedene Arten von Befestigungselementen für harte Untergründe, wie Beton, Mauerwerk und dergleichen bekannt, welche in ein zuvor erstelltes Bohrloch in dem Untergrund gesetzt werden. Derartige Befestigungselemente werden je nach Ausgestaltung drehend und/oder schlagend gesetzt.

Aus der EP 0 623 759 B1 ist eine gewindeformende Schraube zum Einschrauben in harte Untergründe bekannt, die einen Schaft als Grundkörper und einen Schraubenkopf als Angriffsmittel für ein Setzwerkzeug an einem Ende des Schafts aufweist.

Aus der EP 1 536 149 A2 ist eine Innengewindehülse mit einem selbstfurchenden Gewinde bekannt.

Aus der US 4,350,464 A ist eine schlagend setzbare Ankerstange bekannt, die an einem Schaft als Grundkörper ein selbstfurchendes Gewinde, dessen Höhe sich von der Mantelfläche des Schafts radial nach außen erstreckt, sowie daran anschließend ein Maschinengewinde für die Festlegung eines Gegenstandes, z. B. mittels einer Mutter, an dem Untergrund aufweist.

Nachteilig an den bekannten Lösungen ist, dass aufgrund der Eigenschaften des Untergrundes und der Art und des Zustandes des Werkzeuges zum Erstellen des Bohrloches die Größe des Ringspaltes zwischen der Mantelfläche des Grundkörpers und der Bohrlochwandung von Befestigungspunkt zu Befestigungspunkt stark variieren kann. Zudem können hohe Belastungen auf die von dem Gewinde erzeugten Hinterschnitte im Untergrund wirken, welche zu einem teilweisen oder - im extremsten Fall - zu einem vollständigen Versagen des erstellten Befestigungspunktes führen. Um dies zu vermeiden und eine hohe Tragfähigkeit zu erreichen, weisen derartige Befestigungselemente eine relativ große Einbindelänge des Gewindes im Untergrund auf, was jedoch einen hohen Aufwand zum Setzen des entsprechenden Befestigungselementes bedingt.

Aus der DE 198 20 671 A1, der DE 103 11 471 A1 oder der DE 10 2006 000 414 A1 ist eine Schraube mit einem selbstschneidenden Gewinde bekannt, die in ein zuvor mit einer aushärtbaren Masse befülltes Bohrloch gesetzt wird. Das Gewinde dieses Befestigungselementes ist nach dem Aushärten der aushärtbaren Masse in dem Untergrund und in der Masse verankert.

Geeignete aushärtbare Massen, wie z. B. der aus der DE 10002605 A1 bekannte Zweikomponentenmörtel auf Epoxidbasis oder der aus der DE 3514031 A1 bekannte Masse Zweikomponentenmörtel auf Basis radikalisch härtbarer Verbindungen, die dem Fachmann beispielsweise auch als Universalmörtel bekannt sind, weisen einen hohen Füllstoffanteil auf, was eine hohe Viskosität und geringes Schrumpfverhalten bei einer ausreichenden inneren Festigkeit der ausgehärteten Masse gewährleistet.

Nachteilig an der Lösung etwa gemäß der DE 198 20 671 A1 ist zudem, dass der Ringspalt zwischen der Mantelfläche des Grundkörpers und der Bohrlochwandung eine ausreichende Größe aufweisen muss, so dass neben dünnflüssigen Massen auch aushärtbare Massen mit Füllstoffen verwendbar sind. Zur vollständigen Verfüllung dieses Ringspaltes ist somit eine große Menge der aushärtbaren Masse erforderlich.

Die für Ankerstangen bekannten Patronensysteme, wie sie etwa aus der EP 0 431 302 A2, der EP 0 432 087 A1, der EP 0 312 776 A1 oder der EP 0 638 705 A1 bekannt sind, sind aufgrund des sehr kleinen Ringspalts für die Anwendung mit selbstfurchenden Schrauben nicht geeignet, da sie entweder zu grobkörnige Füllstoffe enthalten oder die Patronen nicht mit herkömmlichen gewindeformenden Schrauben zerkleinert werden können oder die Patronen selbst beim Zerkleinern zu große Partikel ergeben. Da bei dieser Anwendung nur wenige Schraubendrehungen möglich sind, bis die Schraube gesetzt ist, muss eine schnelle Durchmischung der aushärtbaren Masse gewährleistet sein, damit diese zuverlässig aushärtet, was mit den bekannten Massen bisher nicht möglich ist.

Wird eine herkömmliche gewindeformende Schraube in ein zuvor mit einer aushärtbaren Masse befülltes Bohrloch gesetzt, ist der Ringspalt zwischen der Mantelfläche des Grundkörpers und der Bohrlochwandung für die meisten Arten von aushärtbaren Massen, die sehr hoch mit anorganischen Füllstoffen gefüllt sind, zu klein. Somit können lediglich dünnflüssige, aushärtbare Massen verwendet werden, die verhältnismäßig teuer sind und im Vergleich zu aushärtbaren Massen mit Füllstoffen eine geringere Festigkeit aufweisen.

Es ist daher Aufgabe der Erfindung ein mehrkomponentiges Reaktionsharzsystem zur Verwendung bei der Befestigung einer gewindeformenden Schraube bereitzustellen, durch deren Verwendung es nicht nur möglich wird, eine schnelle und zuverlässige Durchmischung beim Einsatz von gewindeformenden Schrauben zu gewährleisten, sondern auch eine saubere und sicher Handhabung bei der Verwendung mit gewindeformenden Schrauben gewährleistet, wodurch das Setzen der Schrauben sicher und ohne Gefahr einer Verschmutzung des Anwenders sowie der direkten Arbeitsumgebung durchgeführt werden kann.

Diese Aufgabe wird durch ein mehrkomponentiges Reaktionsharzsystem nach Anspruch 1 gelöst.

Erfindungsgemäß wird ein mehrkomponentiges Reaktionsharzsystem zur Verwendung mit gewindeformenden Schrauben bereitgestellt, welches in einer ersten Komponente (auch Harzkomponente genannt) mindestens eine radikalisch härtbare Verbindung und einen anorganischen Füllstoff und in einer weiteren zweiten Komponente (auch Härterkomponente genannt) ein Härtungsmittel für das mindestens eine radikalisch härtbare Reaktionsharz und Wasser enthält, das dadurch gekennzeichnet ist, dass der anorganische Füllstoff hydrophile Eigenschaften aufweist.

Dieses Reaktionsharz-System ist ein Reaktionsharz-System für die chemische Befestigung. Das Reaktionsharz-System hat typischerweise eine Harzkomponente, die eine radikalisch härtbare Verbindung, und eine Härterkomponente, die ein Härtungsmittel für die radikalisch härtbare Verbindung, insbesondere ein Peroxid enthält. Der als anorganische Füllstoff verwendete anorganische Füllstoff mit hydrophilen Eigenschaften ist in der Harzkomponente enthalten, um ein Verdicken der Härterkomponente während der Lagerung des Reaktionsharz-Systems zu verhindern.

Die Harzkomponente und die Härterkomponente sind bis zur Verwendung des Reaktionsharz-Systems räumlich getrennt voneinander verpackt, damit erst eine Reaktion stattfindet, wenn die beiden Komponenten miteinander in Kontakt gebracht werden.

Zum besseren Verständnis der Erfindung werden die folgenden Erläuterungen der hierin verwendeten Terminologie als sinnvoll erachtet. Im Sinne der Erfindung bedeuten:
- *"Reaktionsharzmischung"* eine Mischung aus mindestens einem Reaktionsharz und/oder mindestens einem Reaktivverdünner, wobei die Mischung gegebenenfalls einen Beschleuniger und/oder einen Inhibitor enthalten kann;
- "*Reaktionsharz auf Basis einer radikalisch härtbaren Verbindung*", kurz auch "Reaktionsharz" oder "*Basisharz*" genannt, eine üblicherweise feste oder hochviskose "*radikalisch härtbare*", d.h. radikalisch polymerisierbare ungesättigte Verbindung, welche durch Polymerisation härtet und eine Harzmatrix bildet; das Reaktionsharz ist das Umsetzungsprodukt einer Bulkreaktion an sich; hiervon ist auch der Reaktionsansatz zur Herstellung des Basisharzes nach beendeter Reaktion umfasst, der ohne Isolierung des Produkts vorliegt und daher neben der radikalisch härtbaren Verbindung, das Reaktionsharz, einen Reaktivverdünner, einen Stabilisator und einen Katalysator, sofern verwendet, enthalten kann;
- *"Reaktivverdünner"* flüssige oder niedrigviskose Monomere und Oligomere, welche das Reaktionsharz verdünnen und dadurch die zu deren Applikation notwendige Viskosität verleihen, eine oder mehrere zur Reaktion mit dem Reaktionsharz befähigte funktionelle Gruppen enthalten und bei der Polymerisation (Härtung) zum überwiegenden Teil Bestandteil der gehärteten Masse (Harzmatrix) werden;
- *"Inhibitor"* eine zur Inhibierung der Polymerisationsreaktion (Härtung) fähige Verbindung, die dazu dient, die Polymerisationsreaktion und damit ein unerwünschtes vorzeitiges Polymerisieren des Reaktionsharzes während der Lagerung zu vermeiden (in dieser Funktion oftmals auch als Stabilisator bezeichnet) und/oder den Start der Polymerisationsreaktion unmittelbar nach der Zugabe des Härtungsmittels zu verzögern; welche Aufgabe der Inhibitor hat, hängt davon ab, in welchen Mengen er eingesetzt wird;
- *"Härtungsmittel"* Stoffe, welche die Polymerisation (das Härten) der radikalisch härtbaren ungesättigten Verbindung, insbesondere des Reaktionsharzes, bewirken bzw. initiieren;
- *"Beschleuniger"* eine zur Beschleunigung der Polymerisationsreaktion (Härtung) fähige Verbindung, die dazu dient, die Bildung von Radikalen, insbesondere aus dem Härtungsmittel, zu beschleunigen;
- *"Harzkomponente"* eine Mischung aus dem Reaktionsharz und anorganischen und/oder organischen Zuschlagstoffen (Füllstoffe und/oder Additive), wie etwa einem Inhibitor und/oder einem Beschleuniger;
- *"Härterkomponente"* eine Mischung aus dem Härtungsmittel und anorganischen und/oder organischen Zuschlagstoffen (Füllstoffe und/oder Additive), wie etwa ein Phlegmatisierungsmittel, d.h. Stabilisierungsmittel für das Härtungsmittel;
- *"Füllstoff"* eine organische oder anorganische, insbesondere anorganische Verbindung, die passiv und/oder reaktiv und/oder funktional sein kann; *"passiv"* bedeutet dabei, dass die Verbindung unverändert von der härtenden Harzmatrix umschlossen wird; *"reaktiv"* bedeutet dabei, dass die Verbindung in die Harzmatrix einpolymerisiert und ein erweitertes Netzwerk mit den Harzkomponenten bildet; *"funktional"* bedeutet dabei, dass die Verbindung nicht in die Harzmatrix einpolymerisiert aber eine bestimmte Funktion in der Formulierung erfüllt;
- *"zweikomponentiges Reaktionsharzsystem"* ein Reaktionsharzsystem, das zwei voneinander getrennt gelagerte Komponenten, im Allgemeinen eine Harzkomponente und eine Härterkomponente, umfasst, so dass eine Härtung des Reaktionsharzes erst nach dem Mischen der beiden Komponenten erfolgt;
- *"mehrkomponentiges Reaktionsharzsystem"* ein Reaktionsharzsystem, das mehrere voneinander getrennt gelagerte Komponenten umfasst, so dass eine Härtung des Reaktionsharzes erst nach dem Mischen aller Komponenten erfolgt;
- *"(Meth)acryl...*/*...(meth)acryl..."*, dass sowohl die "Methacryl.../...methacryl..."- als auch die "Acryl.../...acryl..."-Verbindungen umfasst sein sollen; bevorzugt sind in der vorliegenden Erfindung "Methacryl.../...methacryl..." -Verbindungen;
- *"ein", "eine", "einer"* als Artikel vor einer chemischen Verbindungsklasse, z.B. vor dem Wort "Reaktivverdünner", dass eine oder mehrere unter diese chemische Verbindungsklasse fallende Verbindungen, z.B. verschiedene *"Reaktivverdünner",* gemeint sein können;
- *"mindestens ein", "mindestens eine", "mindestens einer"* zahlenmäßig *"ein oder mehrere"*; in einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können; diese Begriffe sind einschließlich gemeint und umfassen daher auch *"bestehen aus"*; *"bestehen aus"* ist abschließend gemeint und bedeutet, dass keine weiteren Bestandteile vorhanden sein können; in einer bevorzugten Ausführungsform bedeuten die Begriffe *"enthalten", "umfassen"* und *"beinhalten"* den Begriff *"bestehen aus"*;
- *"etwa"* vor einem Zahlenwert einen Bereich von ± 5% dieses Wertes, bevorzugt ± 2% dieses Wertes, besonders bevorzugt ± 0% dieses Wertes (also genau diesen Wert).

Ein erster Gegenstand der Erfindung ist das mehrkomponentige Reaktionsharzsystem nach Anspruch 1. Die Unteransprüche 2 bis 11 betreffen bevorzugte Ausführungsformen dieses Erfindungsgegenstandes.

Ein zweiter Gegenstand der Erfindung ist die Verwendung nach Anspruch 12. Der Unteranspruch 13 betrifft eine bevorzugte Ausführungsform dieses Erfindungsgegenstandes.

Ein erster Gegenstand der Erfindung ist demnach ein mehrkomponentiges Reaktionsharzsystem zur Verwendung mit gewindeformenden Schrauben, welches in einer ersten Komponente eine radikalisch härtbare Verbindung und einen anorganischen Füllstoff und in einer weiteren zweiten Komponente ein Härtungsmittel für das radikalisch härtbare Reaktionsharz und Wasser enthält, was dadurch gekennzeichnet ist, dass der anorganische Füllstoff hydrophile Eigenschaften aufweist.

Das erfindungsgemäße mehrkomponentige Reaktionsharzsystem umfasst eine Harzkomponente und eine Härterkomponente. Die Harzkomponente enthält mindestens eine radikalisch härtbare Verbindung. Die radikalisch härtbare Verbindung kann ein Reaktionsharz sein. Alternativ kann die eine radikalisch härtbare Verbindung ein Reaktivverdünner sein. Gemäß einer weiteren Alternative kann die radikalisch härtbare Verbindung auch eine Mischung aus mindestens einem Reaktionsharz und mindestens einem Reaktivverdünner, eine Reaktionsharzmischung, umfassen.

Geeignete radikalisch härtbareVerbindungen als Reaktionsharz sind ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Besonders bevorzugt ist die radikalisch härtbare Verbindung, das Reaktionsharz, eine ungesättigte Verbindung auf Urethan(meth)acrylatbasis, Epoxy(meth)acrylatbasis, ein (Meth)acrylat eines alkoxylierten Bisphenols oder eine Verbindung auf Basis weiterer ethylenisch ungesättigter Verbindungen.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze (synonym: (Meth)acrylatharze) sind dabei aufgrund ihrer hydrolytischen Beständigkeit und ausgezeichneten mechanischen Eigenschaften am stärksten bevorzugt. Ganz besonders bevorzugt sind Vinylesterurethanharze, insbesondere Urethanmethacrylate. Zu diesen zählen als bevorzugte Harze die in der DE 10 2011 017 626 B4 beschriebenen Urethanmethacrylatharze. Diesbezüglich wird die DE 10 2011 017 626 B4, und vor allem ihre Beschreibung der Zusammensetzung dieser Harze, insbesondere in den Beispielen der DE 10 2011 017 626 B4, hier durch Bezugnahme aufgenommen.

Beispiele geeigneter ungesättiger Polyester, die erfindungsgemäß verwendet werden können, werden in folgende Kategorien eingeteilt, wie sie durch M. Malik et al. in J. M. S. - Rev. Macromol. Chem. Phys., C40 (2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, und gegebenfalls mit einem Kettenverlängerer, wie etwa Diethylenglykol oder Dipropylenglykol, erhalten werden. Beispiele solcher Verbindungen sind aus den Anmeldungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden. Ganz besonders geeignet und bevorzugt sind die in DE 10 2011 017 626 B4 beschriebenen Urethanmethacrylatharze (die auch als Vinylesterurethanharze bezeichnet werden), deren Zusammensetzung hier durch Bezugnahme aufgenommen wird.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, Neopentylglycol-mono(meth)acrylat geeignet. Bevorzugt sind Acryl- bzw. Methacrylsäurehydroxyalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen. Acrylsäure ist wegen ihrer geringeren Alkalistabilität weniger bevorzugt als am Kohlenwasserstoffrest substituierte Acrylsäuren.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglycol, Propandiol, Dipropylenglycol, andere Diole, wie 1,4-Butandiol, 1,6-Hexandiol, Neopentylglycol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Reaktionsharze, die erfindungsgemäß als radikalisch härtbareVerbindungen verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Reaktionsharz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

In einer Ausführungsform enthält die Harzkomponente des Reaktionsharzsystems zusätzlich zu dem Reaktionsharz mindestens eine weitere niederviskose, radikalisch polymerisierbare Verbindung als Reaktivverdünner. Diese wird zweckmäßig zu dem Reaktionsharz gegeben und ist daher in der Harzkomponente enthalten.

Geeignete, insbesondere niederviskose, radikalisch härtbare Verbindungen als Reaktivverdünner sind in den Anmeldungen EP 1 935 860 A1 und DE 195 31 649 A1 beschrieben. Vorzugsweise enthält das Reaktionsharzsystem als Reaktivverdünner einen (Meth)acrylsäureester, wobei besonders bevorzugt folgende (Meth)acrylsäureester verwendet werden können: Hydroxyalkyl(meth)acrylate wie Hydroxypropyl(meth)acrylat, 2-Hydroxyethyl(meth)acrylat; Alkandiol(meth)acrylate wie Ethandiol-1,2-di(meth)acrylat, Propandiol-1,3-di(meth)acrylat, Butandiol-1,2-di(meth)acrylat, Butandiol-1,3-di(meth)acrylat, Butandiol-1,4-di(meth)acrylat, Hexandiol-1,6-di(meth)acrylat, 2-Ethylhexyl(meth)acrylat, Phenylethyl-(meth)acrylat, Tetrahydrofurfuryl(meth)acrylat; Trimethylolpropantri(meth)acrylat; Ethyltriglykol(meth)acrylat; N,N-Dimethylaminoethyl(meth)acrylat; N,N-Dimethylaminomethyl(meth)acrylat; Acetoacetoxyethyl(meth)acrylat; Alkylen(meth)acrylate wie Ethylen- und Diethylenglykoldi(meth)acrylat; Oligo- und Polyalkylenglykoldi(meth)acrylate wie PEG200di(meth)acrylat; Methoxypolyethylenglykolmono(meth)acrylat; Trimethylcyclohexyl(meth)acrylat; Dicyclopentenyloxyethyl(meth)acrylat; Tricyclopentadienyldi(meth)acrylat; Dicyclopentenyloxyethylcrotonat; Bisphenol-A-(meth)acrylat; Novolakepoxidi(meth)acrylat; Di-[(meth)acryloyl-maleoyl]-tricyclo-5.2.1.0.^{2.6}-decan; 3-(Meth)acryloyl-oxymethyl-tricylo-5.2.1.0.^{2.6}-decan; 3-(Meth)cyclopentadienyl(meth)-acrylat; Isobornyl(meth)acrylat; Decalyl-2-(meth)acrylat; Tetrahydrofurfuryl(meth)acrylat; und alkoxylierte Tri-, Tetra- und Pentamethylacrylate.

Der Reaktivverdünner kann alleine oder als Mischung aus zwei oder mehreren Reaktivverdünnern eingesetzt werden.

Grundsätzlich können auch andere übliche radikalisch polymerisierbare Verbindungen, allein oder im Gemisch mit den im vorhergehenden Absatz beschriebenen (Meth)acrylsäureestern, eingesetzt werden, z.B. Styrol, α-Methylstyrol, alkylierte Styrole, wie tert-Butylstyrol, Divinylbenzol und Vinyl- sowie Allylverbindungen. Beispiele für derartige Vinyl- oder Allylverbindungen sind Hydroxybutylvinylether, Ethylenglycoldivinylether, 1,4-Butandioldivinylether, Trimethylolpropandivinylether, Trimethylolpropantrivinylether, Mono-, Di-, Tri-, Tetra- und Polyalkylenglycolvinylether, Mono-, Di-, Tri-, Tetra- und Polyalkylenglycolallylether, Adipinsäuredivinylester, Trimethylolpropandiallylether und Trimethylolpropantriallylether.

Besonders bevorzugte Reaktivverdünner sind die in den Beispielen verwendeten Reaktivverdünner.

Die radikalisch härtbare Verbindung kann in einer Menge von 10 bis 99,99 Gew.-%, bevorzugt 15 bis 97 Gew.-%, besonders bevorzugt 30 bis 95 Gew.-%, bezogen auf die Harzkomponente, in dem Reaktionsharzsystem enthalten sein. Hierbei kann die radikalisch hätbare Verbindung entweder ein Reaktionsharz auf Basis eine radikalisch härtbaren Verbdinung oder ein Reaktivverdünner oder eine Mischung eines Reaktionsharzes mit zwei oder mehreren Reaktivverdünnern sein.

Für den Fall, dass die radikalisch härtbare Verbindung eine Reaktionsharzmischung ist, so entspricht die Menge der Mischung, die in dem Reaktionsharzsystem enthalten sein kann, der Menge der radikalisch härtbaren Verbindung, nämlich von 10 bis 99,99 Gew.-%, bevorzugt 15 bis 97 Gew.-%, besonders bevorzugt 30 bis 95 Gew.-%, bezogen auf die Harzkomponente, wobei, bezogen auf die Reaktionsharzmischung, der Anteil des Reaktionsharzes 0 bis 100 Gew.-%, bevorzugt 30 bis 65 Gew.-% und der Anteil des Reaktivverdünners oder einer Mischung aus mehreren Reaktivverdünnern 0 bis 100 Gew.-%, bevorzugt 35 bis 70 Gew.-% beträgt.

Die Gesamtmenge der radikalisch härtbaren Verbindung hängt von dem Füllgrad, also der Menge der anorganischen Füllstoffe, einschließlich der nachfolgend aufgeführten Füllstoffe, insbesondere die hydrophilen Füllstoffe, die weiteren anorganischen Zuschlagstoffe und die hydraulisch abbindenden bzw. polykondensierbaren Verbindungen.

Erfindungsgemäß wird als anorganischer Füllstoff einer verwendet, der hydrophile Eigenschaften aufweist. Hydrophile Eigenschaften bedeutet dabei, dass die Füllstoffe eine Wechselwirkung mit Wasser eingehen oder mit Wasser reagieren können. Hierdurch wird sichergestellt, dass unmittelbar nach dem Mischen der Harzkomponente und der wasserhaltigen Härterkomponente die erhaltene Masse so viskos wird, dass sie standfest wird, und damit nicht mehr aus dem Bohrloch läuft, was insbesondere bei Überkopfbefestigungen oder bei Wandbefestigungen von Vorteil ist. Die Viskosität ist so hoch, dass selbst bei einem Herausdrehen der Schraube unmittelbar nach dem Setzen der Schraube, wenn die Masse noch nicht oder nicht vollständig ausgehärtet ist, die Masse durch die Drehbewegung der Schraube nicht verspritzt wird.

Bei den verwendeten anorganischen Füllstoffen können insbesondere die Oberflächen aber auch die inneren Bereiche hydrophile Eigenschaften aufweisen. Insbesondere die Oberflächen der anorganischen Füllstoffe können durch hydrophile Beschichtungen, Grundierungen oder Versiegelungen modifiziert sein.

Beispiele anorganischer Füllstoffe mit hydrophilen Eigenschaften umfassen solche, deren Oberfläche mit einem hydrophilen Oberflächenbehandlungsmittel behandelt ist. Beispiele solcher hydrophilen Oberflächenbehandlungsmittel umfassen unter anderem Silanoberflächenbehandlungsmittel, Titanatoberflächenbehandlungsmittel, Aluminiumoberflächenbehandlungsmittel, Zirkoniumaluminatoberflächenbehandlungsmittel, Al₂O₃, TiO₂, ZrO₂, Silicon und Aluminiumstearat, worunter ein Silanoberflächenbehandlungsmittel bevorzugt ist.

Gemäß einer weiteren bevorzugten Ausführungsform des erfindungsgemäßen mehrkomponentigen Reaktionsharzsystems umfasst der anorganische Füllstoff Mineralstoffe, ausgewählt aus einer Gruppe bestehend aus Erdalkalimetallen und deren Salzen, Bentonit, Carbonaten, Kieselsäuren, Kieselgel, Salzen von Erdalkalimetallen mit Kieselsäure und Silicaten, insbesondere Kieselsäuren.

Der anorganische Füllstoff kann durch ein Trockenverfahren, wie Dampfphasenabscheidung oder Verbrennung, oder durch ein Nassverfahren, wie Fällung, hergestellt werden. Ebenso kann ein kommerziell erhältliches Produkt verwendet werden. Unter Berücksichtigung der rheologischen Eigenschaften des Reaktionsharzsystems ist der hydrophile anorganische Füllstoff bevorzugt ein Feinfüllstoff, mit einer Oberfläche von mehr als 80 m²/g, bevorzugt von mehr als 150 m²/g und stärker bevorzugt zwischen 150 und 400 m²/g.

Gemäß einer weiteren bevorzugten Ausführungsform des erfindungsgemäßen mehrkomponentigen Reaktionsharzsystems umfasst der anorganische Füllstoff einen siliziumoxid-basierten Füllstoff.

Gemäß einer weiteren besonders bevorzugten Ausführungsform des erfindungsgemäßen mehrkomponentigen Reaktionsharzsystems umfasst der anorganische Füllstoff eine Kieselsäure.

Die Kieselsäure ist nicht auf eine bestimmte Art oder deren Herstellung beschränkt. Die Kieselsäure kann eine natürliche oder eine synthetische Kieselsäure sein.

Die Kieselsäure ist bevorzugt eine amorphe Kieselsäure, die aus der Gruppe bestehend aus kolloidaler Kieselsäure, nasschemisch hergestellter Kieselsäuren, wie Fällungskieselsäuren, Kieselgele, Kieselsole, pyrogen oder thermisch hergestellter Kieselsäuren, die z.B. im Lichtbogen, Plasma oder durch Flammenhydrolyse hergestellt sind, Kieselrauch, Kieselglas (Quarzglas), Kieselgut (Quarzgut) und Skeletten von Radiolarien und Diatomeen in Form von Kieselgur ausgewählt ist.

Der Anteil des hydrophilen anorganischen Füllstoffs hängt von den gewünschten Eigenschaften des mehrkomponentigen Reaktionsharzsystems ab. Bevorzugt wird der hydrophile anorganische Füllstoff in einer Menge von 0,01 bis 15 Gew.-%, stärker bevorzugt 0,1 bis 10 Gew.-% und besonders bevorzugt im Bereich von 1 bis 7 Gew.-%, jeweils bezogen auf die Harzkomponente, verwendet.

Bevorzugt enthält das Reaktionsharz-System keine weiteren Füllstoffe.

Es ist jedoch nicht ausgeschlossen, dass das Reaktionsharz-System weitere Füllstoffe enthalten kann. Dies vor allem dann, wenn die Eigenschaften des Reaktionsharz-Systems angepasst werden müssen.

Gemäß einer Ausführungsform enthält die Harzkomponente daher weitere, andere anorganische Zuschlagstoffe, wie Füllstoffe und/oder weitere Zusätze.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich jedoch die globulären, inerten Stoffe (Kugelform) aus.

Die weiteren Füllstoffe liegen in der Harzkomponente vorzugsweise in solch einer Menge vor, dass die Gesamtmenge der Füllstoffe, also die Gesamtmenge des hydrophilen Füllstoffs und der weiteren Füllstoffe von 0,01 bis zu 90, insbesondere 0,01 bis 60, vor allem 0,01 bis 50 Gew.-%, jeweils bezogen auf die Harzkomponente, beträgt.

Weitere denkbare Zusätze sind ferner Rheologieadditive, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können, vorzugsweise in einer Menge bis zu 30 Gew.-%, bezogen auf die jeweilige Komponente (Harzkomponente, Härterkomponente), beispielsweise von 1 bis 20 Gew.-%, vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, oder Wasser.

Bei einer weiteren Ausführungsform der Erfindung enthält die Harzkomponente neben der radikalisch härtbaren Verbindung zusätzlich noch eine hydraulisch abbindende oder polykondensierbare anorganische Verbindung, insbesondere Zement. Derartige Hybridmörtelsysteme sind ausführlich in DE 42 31 161 A1 beschrieben. Dabei enthält die Harzkomponente vorzugsweise als hydraulisch abbindende oder polykondensierbare anorganische Verbindung Zement, beispielsweise Portlandzement oder Aluminatzement, wobei übergangsmetalloxidfreie oder übergangsmetallarme Zemente besonders bevorzugt sind. Als hydraulisch abbindende anorganische Verbindung kann auch Gips als solcher oder in Mischung mit dem Zement eingesetzt werden. Die Harzkomponente kann als polykondensierbare anorganische Verbindung auch silikatische, polykondensierbare Verbindungen, insbesondere lösliches, gelöstes und/oder amorphes Siliziumdioxid enthaltende Stoffe wie z.B. pyrogene Kieselsäure umfassen.

Die hydraulisch abbindende oder polykondensierbare Verbindung kann in einer Menge von 0 bis 30 Gew.-%, bevorzugt 1 bis 25 Gew.-%, besonders bevorzugt 5 bis 20 Gew.-%, bezogen auf die Harzkomponente, in dem Reaktionsharzsystem enthalten sein.

In einer weiteren Ausführungsform enthält das Reaktionsharzsystem des Weiteren mindestens einen Beschleuniger. Hierdurch wird die Härtungsreaktion beschleunigt.

Geeignete Beschleuniger sind dem Fachmann bekannt. Diese sind zweckmäßig Amine.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind Anilin- und Toluidin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Bevorzugte Beschleuniger sind N,N-Bis(2-hydroxypropyl)toluidine, N,N-Bis(2-hydroxyethyl)toluidine und para-Toluidin Ethoxylat (Bisomer® PTE).

Der Beschleuniger kann in einer Menge von 0 bis 10 Gew.-%, bevorzugt 0,01 bis 5 Gew.-%, besonders bevorzugt 0,5 bis 3 Gew.-%, bezogen auf die Harzkomponente, in den Reaktionsharzsystem enthalten sein. Sind mehrere Beschleuniger enthalten, so entspricht die eben genannte Menge der Gesamtmenge an Beschleunigern.

In einer noch weiteren Ausführungsform enthält die Harzkomponente des Weiteren einen Inhibitor sowohl für die Lagerstabilität des Reaktionsharzes und der Harzkomponente als auch zur Einstellung der Gelzeit. Der Inhibitor kann alleine oder zusammen mit dem Beschleuniger in dem Reaktionsharzsystem enthalten sein. Bevorzugt wird zur Einstellung der Verarbeitungszeit bzw. Gelzeit eine entsprechend aufeinander abgestimmte Beschleuniger-Inhibitor-Kombination eingesetzt.

Als Inhibitoren sind die für radikalisch polymerisierbare Verbindungen üblicherweise verwendeten Inhibitoren geeignet, wie sie dem Fachmann bekannt sind. Bevorzugt sind die Inhibitoren unter phenolischen Verbindungen und nicht-phenolischen Verbindungen, wie stabilen Radikalen und/oder Phenothiazinen, ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet.

Als nicht-phenolische oder anaerobe, d.h. im Gegensatz zu den phenolischen Inhibitoren auch ohne Sauerstoff wirksame Inhibitoren kommen vorzugsweise Phenothiazine, wie Phenothiazin und/oder Derivate oder Kombinationen davon, oder stabile organische Radikale, wie Galvinoxyl- und N-oxyl-Radikale in Betracht.

Als N-Oxyl-Radikale können beispielsweise solche verwendet werden, wie sie in der DE 199 56 509 beschrieben sind. Geeignete stabile N-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-Oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Diese Verbindungen sind besonders deshalb sinnvoll und meist erforderlich, da sonst die anzustrebende Lagerstabilität von vorzugsweise mehr als 3 Monaten, insbesondere 6 Monaten oder mehr, nicht erreicht werden kann. Die UV- und insbesondere die Lagerstabilität können so beträchtlich erhöht werden.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Bevorzugte Inhibitoren sind 1-Oxyl-2,2,6,6-tetramethylpiperidin (TEMPO) und 1-Oxyl-2,2,6,6-tetramethylpiperidin-4-ol (TEMPOL), Katechole, besonders bevorzugt tert-ButylBrenzkatechin und Brenzkatechin durch die funktionelle Gruppe werden die gewünschten Eigenschaften erreicht (im Vergleich zu den sonst verwendeten Reaktivverdünnern), BHT und Phenothiazin.

Die Inhibitoren können, abhängig von den gewünschten Eigenschaften des Reaktionsharzsystems, entweder alleine oder als Kombination von zweien oder mehreren davon verwendet werden. Die Kombination der phenolischen und der nicht-phenolischen Inhibitoren ermöglicht dabei einen synergistischen Effekt, wie auch die Einstellung einer im Wesentlichen driftfreien Einstellung der Gelzeit der Reaktionsharz-Zusammensetzung zeigt.

Der Inhibitor kann in einer Menge von 0 bis 5 Gew.-%, bevorzugt 0,001 bis 3 Gew.-%, besonders bevorzugt 0,01 bis 1 Gew.-%, bezogen auf die Harzkomponente, in den Reaktionsharzsystem enthalten sein. Sind mehrere Inhibitoren enthalten, so entspricht die eben genannte Menge der Gesamtmenge an Inhibitoren.

Zweckmäßig wird die Härtung der radikalisch härtbaren Verbindung mit einem Peroxid als Härtungsmittel initiiert. Alle dem Fachmann bekannten Peroxide, die zum Härten von Methacrylatharzen verwendet werden, können eingesetzt werden. Derartige Peroxide umfassen organische und anorganische Peroxide, entweder flüssig oder fest, wobei Wasserstoffperoxid auch verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-) und dergleichen. Diese können als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester (z.B. tert-Butylperoxybenzoat), Benzoylperoxid, Peracetate und Perbenzoate, Lauroylperoxid, einschließlich (Di)peroxyester, Perether, wie Peroxydiethylether, Perketone, wie Methylethylketoneperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden sind. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) oder tert-Butylperoxybenzoat verwendet.

Neben dem Peroxid enthält erfindungsgemäß die Härterkomponente noch Wasser als Phlegmatisierungsmittel. Neben dem Wasser kann die Härterkomponente noch weitere Phlegmatisierungsmittel enthalten, wobei Wasser als alleiniges Phlegmatisierungsmittel bevorzugt ist, um keine Verbindungen einzubringen, die eine weichmachende Wirkung haben.

Bevorzugt liegt das Peroxid als Härtungsmittel zusammen mit dem Wasser als Suspension vor. Entsprechende Suspensionen sind in unterschiedlichen Konzentrationen kommerziell erhältlich, wie beispielsweise die wässrigen Dibenzoylperoxid-Suspensionen von United Initiators (BP40SAQ oder BP20SAQ). Perkadox 40L-W (Fa. Nouryon), Luperox® EZ-FLO (Fa. Arkema), Peroxan BP40W (Fa. Pergan).

Das Peroxid kann in einer Menge von 2 bis 50 Gew.-%, bevorzugt 5 bis 45 Gew.-%, besonders bevorzugt 10 bis 40 Gew.-%, bezogen auf die Härterkomponente, in den Reaktionsharzsystem enthalten sein.

Neben Wasser und dem Härtungsmittel enthalten kommerzielle Peroxid-Dispersionen Emulgatoren, Frostschutzmittel, Puffer und Rheologieadditive in nicht veröffentlicher Art und Menge.

Darüber hinaus kann die Härterkomponente zusätzlich weitere Additive, namentlich Emulgatoren, Frostschutzmittel, Puffer und/oder Rheologieadditive, und/oder Füllstoffe enthalten.

Geeignete Emulgatoren sind: ionische, nichtionische oder amphotere Tenside; Seifen, Netzmittel, Detergenzien; Polyalkylenglycolether; Salze von Fettsäuren, Mono- oder Diglyceride von Fettsäuren, Zuckerglyceride, Lecithin; Alkansulfonate, Alkylbenzolsulfonate, Fettalkoholsulfate, Fettalkoholpolyglycolether, Fettalkoholethersulfate, sulfonierte Fettsäuremethylester; Fettalkoholcarboxylate; Alkylpolyglycoside, Sorbitanester, N-Methylglucamide, Saccharoseester; Alkylphenole, Alkylphenolpolyglycolether, Alkylphenolcarboxylate; quartäre Ammoniumverbindungen, Esterquats, Carboxylate quartärer Ammoniumverbindungen.

Geeignete Frostschutzmittel sind: organische oder anorganische, wasserlösliche Zusätze, die die Einfriertemperatur des Wassers herabsetzen; Mono-, bi- oder höherfunktionelle Alkohole, wie Ethanol, n- oder iso-Propanol, n-, iso- oder tert.-Butanol usw.; Ethylenglycol, 1,2- oder 1,3-Propylenglycol, Glycerol, Trimethylolpropan usw. Oligo- oder Polyglycole, wie Dialkylenglycole, Trialkylenglycole usw.; Zucker, insbesondere Mono- oder Disaccharide; Triosen, Tetrosen, Pentosen und Hexosen in ihrer Aldehyl- oder Ketoform sowie der analogen Zuckeralkohole. Beispiele, aber nicht einschränkend, sind Glycerinaldehyd, Fructose, Glucose, Saccharose, Mannitol usw..

Geeignete Puffer sind organische oder anorganische Säure/Base-Paare, die den pH-Wert der Härterkomponente stabilisieren, wie Essigsäure/Alkaliacetat, Zitronensäure/Monoalkalicitrat, Monoalkali-/Dialkalicitrat, Dialkali-/Trialkalicitrat, Kombinationen von mono-, di- und/oder tri-basichen Alkaliphosphaten ggf. mit Phosphorsäure; Ammoniak mit Ammoniumsalzen; Kohlensäure-Bicarbonat-Puffer usw. Verwendet werden können auch intramolekulare, sogenannte Good-Puffer, wie 4-(2-Hydroxyethyl)-1-piperazinethanesulfonsäure (HEPES) oder 2-(N-Morpholino)ethansulfonsäure (MES) sowie Tris(hydroxymethyl)-aminomethan (TRIS) usw..

Die Einstellung der Fließeigenschaften erfolgt über den Zusatz von verdickenden Substanzen, auch Rheologieadditive genannt. Geeignete Rheologieadditive sind: Schichtsilikaten wie Laponiten, Bentonen oder Montmorillonit, Neuburger Kieselerde, pyrogenen Kieselsäuren, Polysacchariden; Polyacrylat-, Polyurethan- oder Polyharnstoffverdickern sowie Celluloseestern. Zur Optimierung können weiterhin Netz- und Dispergiermittel, Oberflächenadditive, Entschäumer & Entlüfter, Wachsadditive, Haftvermittler, Viskositätsreduzierer oder Prozessadditive zugesetzt werden.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich jedoch die globulären, inerten Stoffe (Kugelform) aus.

Die Füllstoffe liegen in der jeweiligen Komponente vorzugsweise in einer Menge von bis zu 80, insbesondere 0 bis 60, vor allem 0 bis 50 Gew.-% vor.

Die Summe der nicht bereits in den kommerziellen Produkten enthaltenen Zusatzstoffe kann bei 0 bis 30, bevorzugt 0 bis 25, besonders bevorzugt bei 0 bis 20 Gew.-%, jeweils bezogen auf die Härterkomponente, liegen.

In einer bevorzugten Ausführungsform der Erfindung enthält die Härterkomponente ferner ein Rheologieadditiv auf Basis eines Schichtsilikats, insbesondere eines aktivierten oder quellfähigen Schichtsilikats. Besonders bevorzugt ist das quellfähige Schichtsilikat ein Magnesium-Aluminium-Silikat oder ein Natrium-Aluminium-Silikat.

In einer bevorzugten Ausführungsform besteht das Rheologieadditiv aus dem quellfähigen Schichtsilikat oder enthält dieses als Hauptbestandteil. *"Hauptbestandteil"* bedeutet dabei, dass das quellfähige Schichtsilikat mehr als die Hälfte des Rheologieadditivs ausmacht, also mehr als 50 Gew.-%, insbesondere 60 bis 80 Gew.-%.

Besonders bevorzugt ist das Rheologieadditiv Montmorillonit oder enthält dieses als Hauptbestandteil, beispielsweise Bentonit.

Die Menge des einzusetzenden Rheologieadditivs hängt im Wesentlichen von der Wassermenge ab, wobei der Fachmann ohne weiteres in der Lage ist, das richtige Verhältnis dieser Bestandteile und auch der gegebenenfalls anzuwendenden Bestandteile derart auszuwählen, dass die Härterkomponente die erforderliche Viskosität und Fließfähigkeit besitzt. Bevorzugt enthält die Härterkomponente das Rheologieadditiv in einer Menge von 0,15 bis 5 Gew.-%, bezogen auf das Gesamtgewicht der Härterkomponente, enthalten ist.

In einer alternativen Ausführungsform kann das Rheologieadditiv weitere Verdicker auf der Basis von Kieselsäuren, wie beispielsweise eine hydrophile pyrogene Kieselsäure, und/oder auf der Basis von Polysacchariden, wie beispielsweise Xanthan Gummi enthalten.

Das Wasser ist in solch einer Menge enthalten, dass, abhängig von den Bestandteilen der Härterkomponente, sich die Gew.-% auf 100 addieren.

In den folgenden beschriebenen Ausführungsformen beziehen sich die Mengenangaben (Gew.-%) jeweils auf die einzelnen Komponenten, also die Harzkomponente und die Härterkomponente, sofern nichts anderes angegeben ist. Die tatsächlichen Mengen sind derart, dass sich die Gew.-% der jeweiligen Komponente auf 100 addieren.

In einer bevorzugten ersten Ausführungsform des erfindungsgemäßen Reaktionsharz-Systems enthält die Harzkomponente:
- mindestens eine radikalisch härtbare Verbindung und
- mindestens einen anorganischen Füllstoff mit hydrophilen Eigenschaften,
und die Härterkomponente enthält:
- mindestens ein Härtungsmittel, welches ein Peroxid ist, und
- Wasser.
In einem bevorzugten Aspekt dieser ersten Ausführungsform ist das Peroxid in dem Wasser gelöst oder besonders bevorzugt suspendiert. In einem weiter bevorzugten Aspekt dieser ersten Ausführungsform enthält die Harzkomponente:
- 85 bis 99,99 Gew.-%, bevorzugt 90 bis 99,9 Gew.-%, besonders bevorzugt 93 bis 99 Gew.-% der mindestens einen radikalisch härtbaren Verbindung, und
- 0,01 bis 15 Gew.-%, bevorzugt 0,1 bis 10 Gew.-%, besonders bevorzugt 1 bis 7 Gew.-% des mindestens einen anorganischen Füllstoffs mit hydrophilen Eigenschaften,
und die Härterkomponente enthält:
- 2 bis 50 Gew.-%, bevorzugt 5 bis 45 Gew.-%, besonders bevorzugt 10 bis 40 Gew.-% des mindestens einen Härtungsmittels, welches ein Peroxid ist, und
- 50 bis 98 Gew.-%, bevorzugt, 55 bis 95 Gew.-%, besonders bevorzugt 60 bis 90 Gew.-% Wasser, sowie
- 0 bis 30 Gew.-%, bevorzugt 0,5 bis 25 Gew.-%, besonders bevorzugt 2 bis 20 Gew.-% Additive, wie Emulgatoren, Frostschutzmittel, Puffer und/oder Rheologieadditive usw.

In einer weiteren, zweiten bevorzugten Ausführungsform enthält die Harzkomponente:
- eine Reaktionsharzmischung aus mindestens einem Reaktionsharz und einem Reaktivverdünner als radikalisch härtbareVerbindung;
- mindestens einen anorganischen Füllstoff mit hydrophilen Eigenschaften, und
und die Härterkomponente enthält:
- mindestens ein Peroxid als Härtungsmittel und
- Wasser.
In einem bevorzugten Aspekt dieser zweiten Ausführungsform ist das Peroxid in dem Wasser gelöst oder besonders bevorzugt suspendiert. In einem weiteren bevorzugten Aspekt dieser zweiten Ausführungsform enthält die Harzkomponente:
- 85 bis 99,99 Gew.-%, bevorzugt 90 bis 99,9 Gew.-%, besonders bevorzugt 93 bis 99 Gew.-% einer Mischung, der Reaktionsharzmischung, aus 0 bis 99,9 Gew.-%, bevorzugt 20 bis 80 Gew.-%, bezogen auf das Gesamtgewicht der Mischung, des mindestens einen Reaktionsharzes und 0 bis 99,99 Gew.-%, bevorzugt 80 bis 20 Gew.-%, bezogen auf das Gesamtgewicht der Mischung, des mindestens einen Reaktivverdünners als radikalisch härtbareVerbindung, und
- 0,01 bis 15 Gew.-%, bevorzugt 0,1 bis 10 Gew.-%, besonders bevorzugt 1 bis 7 Gew.-% des mindestens einen anorganischen Füllstoffs mit hydrophilen Eigenschaften,
und die Härterkomponente enthält:
- 2 bis 50 Gew.-%, bevorzugt 5 bis 45 Gew.-%, besonders bevorzugt 10 bis 40 Gew.-% des mindestens einen Peroxids als Härtungsmittel und
- 50 bis 98 Gew.-%, bevorzugt, 55 bis 95 Gew.-%, besonders bevorzugt 60 bis 90 Gew.-% Wasser.

In einer bevorzugteren, dritten Ausführungsform enthält die Harzkomponente:
- eine Reaktionsharzmischung aus mindestens einem Reaktionsharz und einem Reaktivverdünner als radikalisch härtbareVerbindung,
- mindestens einen anorganischen Füllstoff mit hydrophilen Eigenschaften
- mindestens einen Beschleuniger und
- mindestens einen Inhibitor,
und die Härterkomponente enthält:
- mindestens ein Peroxid als Härtungsmittel,
- Wasser und
- mindestens ein Rheologieadditiv.
In einem bevorzugten Aspekt dieser dritten Ausführungsform ist das Peroxid in dem Wasser gelöst oder besonders bevorzugt suspendiert. In einem weiteren bevorzugten Aspekt dieser dritten Ausführungsform enthält die Harzkomponente:
- 85 bis 99,99 Gew.-%, bevorzugt 90 bis 99,9 Gew.-%, besonders bevorzugt 93 bis 99 Gew.-% einer Mischung, der Reaktionsharzmischung, aus 0 bis 99,9 Gew.-%, bevorzugt 20 bis 80 Gew.-%, bezogen auf das Gesamtgewicht der Mischung, des mindestens einen Reaktionsharzes und 0 bis 99,99 Gew.-%, bevorzugt 80 bis 20 Gew.-%, bezogen auf das Gesamtgewicht der Mischung, des mindestens einen Reaktivverdünners, als radikalisch härtbareVerbindung,
- 0,001 bis 5 Gew.-%, bevorzugt 0,01 bis 3 Gew.-%, weiter bevorzugt 0,1 bis 1 Gew.-% des mindestens einen anorganischen Füllstoff mit hydrophilen Eigenschaften
- 0,01 bis 10 Gew.-%, bevorzugt 0,5 bis 5 Gew.-%, weiter bevorzugt 1 bis 3 Gew.-% des mindestens einen Beschleunigers und
- 0,001 bis 5 Gew.-%, bevorzugt 0,01 bis 3 Gew.-%, weiter bevorzugt 0,1 bis 1 Gew.-% des mindestens einen Inhibitors,
und die Härterkomponente enthält:
- 2 bis 50 Gew.-%, bevorzugt 5 bis 45 Gew.-%, besonders bevorzugt 10 bis 40 Gew.-% des mindestens einen Peroxids als Härtungsmittel und
- 50 bis 98 Gew.-%, bevorzugt, 55 bis 95 Gew.-%, besonders bevorzugt 60 bis 90 Gew.-% Wasser,
- 0 bis 30 Gew.-%, bevorzugt 0,5 bis 25 Gew.-%, besonders bevorzugt 2 bis 20 Gew.-% Additive, wie Emulgatoren, Frostschutzmittel, Puffer und/oder Rheologieadditive usw. sowie
- 0,001 bis 5 Gew.-%, bevorzugt 0,01 bis 3 Gew.-%, weiter bevorzugt 0,1 bis 1 Gew.-% des mindestens eines quellbaren Schicktsilikates.

In einer besonders bevorzugten, vierten Ausführungsform enthält die Harzkomponente:
- eine Reaktionsharzmischung aus mindestens einem Reaktionsharz auf Urethan(meth)acrylatbasis und mindestens einem Reaktivverdünner auf (Meth)acrylatbasis, als radikalisch härtbareVerbindung,
- mindestens einen anorganischen Füllstoff mit hydrophilen Eigenschaften, insbesondere eine Kieselsäure,
- mindestens einen Beschleuniger und
- mindestens einen Inhibitor,
und die Härterkomponente enthält:
- mindestens ein Peroxid, insbesondere ein Diacylperoxid,
- Wasser und
- mindestens ein Rheologieadditiv auf Basis eines Schichtsilikats.
In einem bevorzugten Aspekt dieser vierten Ausführungsform ist das Peroxid in dem Wasser gelöst oder besonders bevorzugt suspendiert. In einem weiter bevorzugten Aspekt dieser vierten Ausführungsform beinhaltet das Reaktionsharzsystem die Bestandteile in den in dem dritten Aspekt angeführten Mengen.

In einer ganz besonders bevorzugten, fünften Ausführungsform enthält die Harzkomponente:
- eine Reaktionsharzmischung aus mindestens einem Reaktionsharz auf Urethan(meth)acrylatbasis undmindestens einem Reaktivverdünner auf (Meth)acrylatbasis, als radikalisch härtbareVerbindung,
- mindestens einen anorganischen Füllstoff mit hydrophilen Eigenschaften, insbesondere hydrophile pyrogene Kieselsäure,
- mindestens einen Beschleuniger und
- mindestens einen Inhibitor,
und die Härterkomponente enthält:
- mindestens ein Peroxid, insbesondere Dibenzoylperoxid,
- Wasser und
- mindestens ein Rheologieadditiv auf Basis eines quellfähigen Schichtsilikats.
In einem bevorzugten Aspekt dieser fünften Ausführungsform ist das Peroxid in dem Wasser gelöst oder besonders bevorzugt suspendiert. In einem weiter bevorzugten Aspekt dieser fünften Ausführungsform beinhaltet das Reaktionsharzsystem die Bestandteile in den in dem dritten Aspekt angeführten Mengen.

In einer weiteren, sechsten Ausführungsform enthält die Harzkomponente:
- eine Reaktionsharzmischung aus mindestens einem Reaktionsharz und mindestens einem Reaktivverdünner als radikalisch härtbareVerbindung,
- mindestens einen anorganischen Füllstoff mit hydrophilen Eigenschaften,
- mindestens eine hydraulisch abbindende oder polykondensierbare anorganische Verbindung,
- mindestens einen Beschleuniger und
- mindestens einen Inhibitor,
und die Härterkomponente enthält:
- mindestens ein Härtungsmittel,
- Wasser und
- mindestens ein Rheologieadditiv.
In einem bevorzugten Aspekt dieser sechsten Ausführungsform ist das Peroxid in dem Wasser gelöst oder besonders bevorzugt suspendiert. In einem weiter bevorzugten Aspekt dieser sechsten Ausführungsform beinhaltet das Reaktionsharzsystem die in dem vierten und/oder fünften Aspekt näher spezifizierten Bestandteile in den in dem dritten Aspekt angeführten Mengen.

Das Reaktionsharz-System, in welchem erfindungsgemäß das Rheologieadditiv mit hydrophilen Eigenschaften verwendet wird, wird erfindungsgemäß mit gewindeformenden Schrauben in Löchern verwendet. Die Löcher können Vertiefungen natürlichen oder nicht-natürlichen Ursprungs sein, also Risse, Spalten, Bohrlöcher und dergleichen. Es sind typischerweise Bohrlöcher, insbesondere Bohrlöcher in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl.

Das Reaktionsharz-System, in welchem erfindungsgemäß ein Rheologieadditiv mit hydrophilen Eigenschaften verwendet wird, zeichnet sich durch eine niedrige Viskosität der dieses Additiv enthaltenden Harzkomponente aber eine hohe Viskosität der Mischung aus der Harzkomponente und der Härterkomponente aus, im Vergleich zu Ausführungsformen ohne das verwendete Rheologieadditiv oder zu Ausführungsformen mit anderen Rheologieadditiven, welche keine hydrophilen Eigenschaften haben, enthalten.

Die Erfindung wird im Folgenden anhand einer Reihe von Beispielen und Vergleichsbeispielen näher erläutert. Alle Beispiele stützen den Umfang der Ansprüche. Die Erfindung ist jedoch nicht auf die spezifischen, in den Beispielen gezeigten Ausführungsformen beschränkt.

### AUSFÜHRUNGSBEISPIELE

### Liste der in den Beispielen und Referenzen verwendeten Bestandteile (Erklärung der Abkürzungen) sowie ihrer Handelsnamen und Bezugsquellen:

| | |
|---|---|
| Urethanmethacrylat | hergestellt wie beschrieben in Beispiel 1a aus der EP 2 838 949 B1 |
| Ecocryl 05345 | Epoxymethacrylat-Harz in Abmischung mit BDDMA (Fa. Hexion) |
| HPMA | Hydroxypropylmethacrylat, Fa. Inchem (CAS-Nummer: 27813-02-1) |
| BDDMA | 1,4-Butandioldimethacrylat, Fa. Inchem (CAS-Nummer: 2082-81-7) |
| IBoMA | Isobornylmethacrylat, SR 423D, Fa. Sartomer (CAS-Nummer: 7534-94-3) |
| DiPpT | Di-Isopropanol-p-toluidin; Fa. BASF (CAS-Nummer 38668-4-3) |
| MEHQ | 4-Methoxyphenol; Fa. Sigma-Aldrich (CAS-Nummer 150-76-5) |
| Cab-o-Sil® M5 | unbehandelte, hydrophile, pyrogene Kieselsäure; Fa. Cabot (CAS Number: 112945-52-5; spez. Oberfläche 200m²/g) |
| Aerosil® 200 | hydrophile, pyrogene Kieselsäure; Fa. Evonik (CAS Number: 112945-52-5; spez. Oberfläche 200m²/g; mittlere Teilchengröße 0,2-0,3 µm (Aggregate)) |
| Cab-o-Sil® TS720 | hydrophobe, pyrogene Kieselsäure; oberflächenbehandelt mit Polydimethylsiloxan (PDMS); Fa. Cabot, (CAS-Nummer: 67762-90-7) |
| HDK® H20RH | hydrophobe, pyrogene Kieselsäure; Oberflächenmodifizierung n-Alkyl-Siloxy-Gruppen; BET-Oberfläche nach DIN ISO 9277 170-230 m²/g; Fa. Wacker Chemie AG |
| BP40SAQ | Dibenzoylperoxid 40%, Suspension in Wasser; Fa. United Initiators |
| Luperox EZ-FLO | Dibenzoylperoxid 40%, Suspension in Wasser; Fa. Arkema |
| Perkadox L-W40 | Dibenzoylperoxid 40%, Suspension in Wasser; Fa. Nouryon |

### Messung der dynamischen Viskosität der Harzkomponenten und der Mischung aus Harzkomponente und Härterkomponente

Die Viskositätsmessungen wurden an einem Rheometer RS 600 der Fa. Thermo/Haake bei einer Scherung von 8/s durchgeführt. Verwendet wurde ein Kegel/Platte-Messsystem mit einem Durchmesser von 20mm und einem Winkel von 4°; Messtemperatur 23°C.

Die Harzkomponenten sowie die Härterkomponenten wurden vorab auf die angegebene Temperatur von 23°C temperiert.

Nach dem Einwiegen - soweit nicht anders angegeben je 8g Harzkomponente und 2g Härterkomponente - in ein Schnappdeckelgläschen wurde dieses verschossen und die Mischung für ca. 10 Sekunden geschüttelt. Mittels Einweg-Pasteurpipette wurde die Probe entnommen und auf die Platte des Rheometers aufgebracht.

Nach dem Einstellen des Spaltes wird für 30 Sekunden nochmals temperiert und die Messung gestartet. Ausgewertet wird die Viskosität bei der Schergeschwindigkeit von 8/s.

Wird die Messung mit beschleunigten Harzkomponenten durchgeführt (Vergleich V2, Beispiel 2 und weitere), ist darauf zu achten, dass durch Zugabe einer ausreichenden Konzentration eines geeigneten Inhibitors eine genügend lange Verarbeitungszeit eingestellt wird.

Die Messung der Reaktionsharzviskositäten erfolgte analog am oben genannten Gerät, jedoch ohne Vormischung und mit einem Kegel 20mm/1° bei einer Scherrate von 100/s.

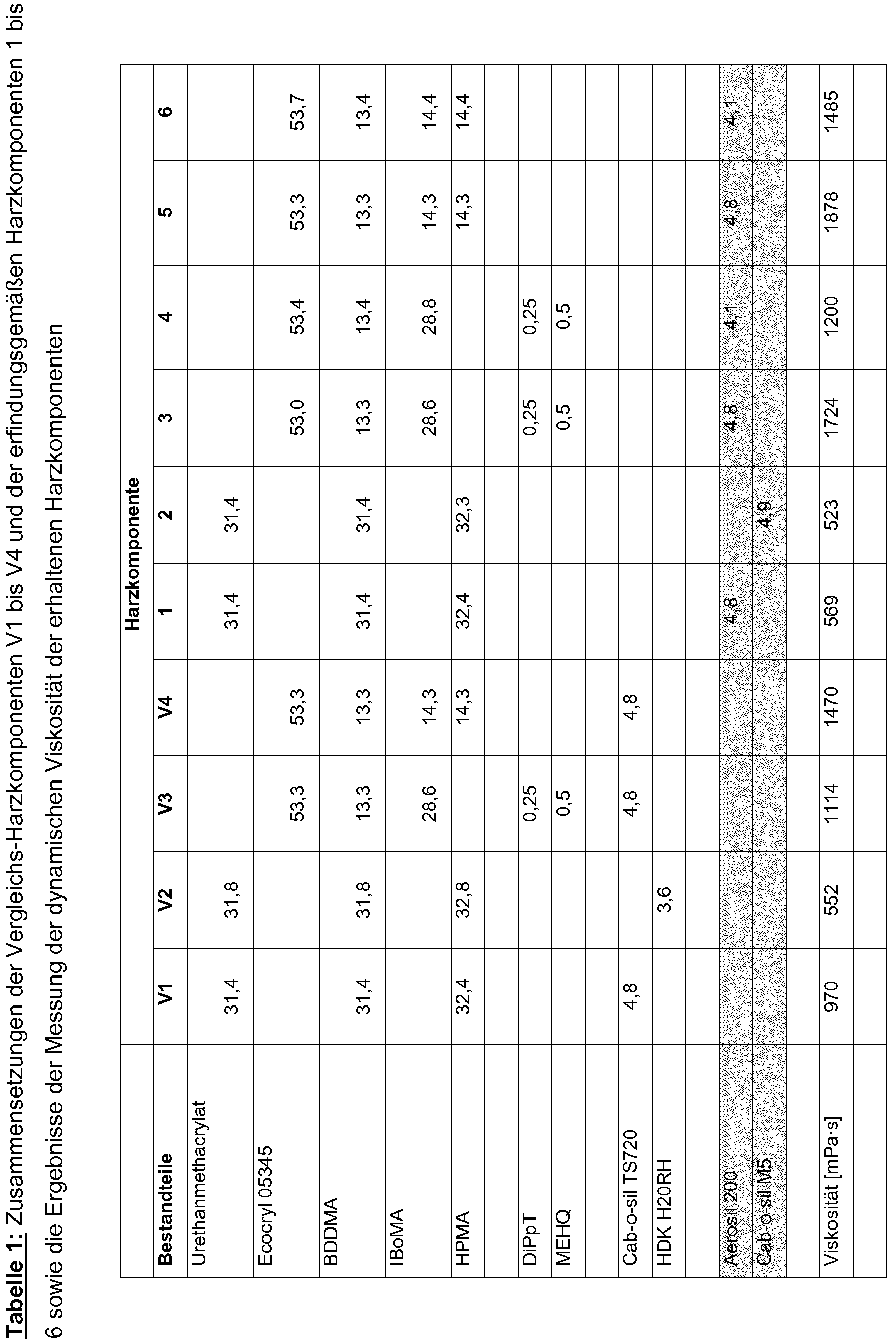

**Tabelle 2: Ergebnisse der Messung der dynamischen Viskosität der Mischungen aus den Vergleichs-Harzkomponenten V1 bis V4 mit einer ersten Härterkomponente (Beispiele 1 bis 6) sowie den erfindungsgemäßen Harzkomponenten 1 bis 6 mit einer ersten Härterkomponente**

| **Harzkomponente** | **Beispiele** | | | | | | | | | | | |
|---|---|---|---|---|---|---|---|---|---|---|---|---|
| | **Vergleich 1** | **Beispiel 1** | **Vergleich 2** | **Beispiel 2** | **Vergleich 3** | **Beispiel 3** | **Vergleich 4** | **Beispiel 4** | **Vergleich 5** | **Beispiel 5** | **Vergleich 6** | **Beispiel 6** |
| V1 | 8 | | | | | | | | | | | |
| 1 | | 8 | | | | | | | | | | |
| V2 | | | | | | | 8 | | | | | |
| 2 | | | | | | | | 8 | | | | |
| V3 | | | 8 | | | | | | 8 | | | |
| 3 | | | | 8 | | | | | | | | |
| 4 | | | | | | | | | | 8 | | |
| V4 | | | | | 8 | | | | | | 8 | |
| 5 | | | | | | 8 | | | | | | |
| 6 | | | | | | | | | | | | 8 |
| | | | | | | | | | | | | |
| BP40SAQ | 2 | 2 | 2 | 2 | 2 | 2 | 2 | 2 | 2 | 2 | 2 | 2 |
| | | | | | | | | | | | | |
| Viskosität [Pa·s] | 5 | 46 | 3 | 26 | 5 | 26 | 7 | 74 | 4 | 14 | 3 | 11 |
| Beispiel/Vergleich | | 9,2 | | 8,7 | | 5,2 | | 10,6 | | 3,5 | | 3,7 |

**Tabelle 3: Ergebnisse der Messung der dynamischen Viskosität der Mischungen aus den Vergleichs-Harzkomponenten V7 bis V9 und den erfindungsgemäßen Harzkomponenten 7 bis 9 mit einer zweiten Härterkomponente**

| **Harzkomponente** | **Beispiele** | | | | | |
|---|---|---|---|---|---|---|
| | **Vergleich 7** | **Beispiel 7** | **Vergleich 8** | **Beispiel 8** | **Vergleich 9** | **Beispiel 9** |
| V1 | | | | | | |
| 1 | | | | | | |
| V2 | 8 | | | | | |
| 2 | | 8 | | | | |
| V3 | | | 8 | | | |
| 3 | | | | | | |
| 4 | | | | 8 | | |
| V4 | | | | | 8 | |
| 5 | | | | | | |
| 6 | | | | | | 8 |
| | | | | | | |
| Perkadox L-W40 | 2 | 2 | 2 | 2 | 2 | 2 |
| | | | | | | |
| Viskosität [Pa·s] | 12 | 42 | 9 | 17 | 6 | 13 |
| Beispiel/Vergleich | | 3,5 | | 1,9 | | 2,2 |

**Tabelle 4: Ergebnisse der Messungen der dynamischen Viskosität der Mischungen aus den Vergleichs-Harzkomponente V10 bis V12 und den erfindungsgemäßen Harzkomponenten 10 bis 12 mit einer dritten Härterkomponente**

| **Harzkomponente** | **Beispiele** | | | | | |
|---|---|---|---|---|---|---|
| | **Vergleich 10** | **Beispiel 10** | **Vergleich 11** | **Beispiel 11** | **Vergleich 12** | **Beispiel 12** |
| V1 | | | | | | |
| 1 | | | | | | |
| V2 | 8 | | | | | |
| 2 | | 8 | | | | |
| V3 | | | 8 | | | |
| 3 | | | | | | |
| 4 | | | | 8 | | |
| V4 | | | | | 8 | |
| 5 | | | | | | |
| 6 | | | | | | 8 |
| | | | | | | |
| Luperox EZ-FLO | 2 | 2 | 2 | 2 | 2 | 2 |
| | | | | | | |
| Viskosität [Pa·s] | 11 | 80 | 8 | 13 | 9 | 14 |
| Beispiel/Vergleich | | 7,3 | | 1,6 | | 1,6 |

Die in Tabelle 1 gezeigten Ergebnisse der Messungen der dynamischen Viskosität zeigen, dass die Harzkomponenten, welche einen erfindungsgemäßen Füllstoff mit hydrophilen Eigenschaften enthalten eine Viskosität im Bereich von 523 mPa·s (Harzkomponente 2) bis 1878 mPa·s (Harzkomponente 5) liegen. Damit liegen die dynamischen Viskositäten mit erfindungsgemäßen Füllstoffen im Bereich der Vergleichs-Harzkomponenten, die im Bereich von 552 mPa·s (Vergleichs-Harzkomponente 2) bis 1470 mPa·s (Vergleichs-Harzkomponente 4) liegen.

Aus den in den Tabellen 2 bis 4 gezeigten Ergebnisse der Messungen der dynamischen Viskosität von Mischungen aus erfindungsgemäßen Harzkomponenten (Beispiel 1 bis 12) bzw. Vergleichs-Harzkomponenten (V1 bis V12) und Härterkomponenten zeigen, dass die dynamischen Viskositäten der Mischungen mit den erfindungsgemäßen Harzkomponenten deutlich höher liegen als die der Mischungen mit den Vergleichs-Harzkomponenten.

Es konnten also Formulierungen entwickelt werden, die trotz niedriger Viskosität der Einzelkomponenten nach der Vermischung in Ihrer Fließfähigkeit soweit eingeschränkt sind, dass sie beim Setzen von Befestigungsmitteln in Wand- und Deckenmontage nicht mehr aus dem Bohrloch ausfließen.

## Patentansprüche

1. Mehrkomponentiges Reaktionsharzsystem zur Verwendung mit gewindeformenden Schrauben, welches in einer ersten Komponente mindestens eine radikalisch härtbare Verbindung und mindestens einen anorganischen Füllstoff und in einer weiteren zweiten Komponente ein Härtungsmittel für das mindestens eine radikalisch härtbare Reaktionsharz und Wasser enthält, **dadurch gekennzeichnet, dass** der anorganische Füllstoff hydrophile Eigenschaften aufweist.

2. Mehrkomponentiges Reaktionsharzsystem nach Anspruch 1, **dadurch gekennzeichnet, dass** der anorganische Füllstoff Mineralstoffe, ausgewählt aus der Gruppe bestehend aus Erdalkalimetallen und deren Salzen, Bentonit, Carbonaten, Kieselsäuren, Kieselgel, Salzen von Erdalkalimetallen mit Kieselsäure und Silicaten umfasst.

3. Mehrkomponentiges Reaktionsharzsystem nach Anspruch 2, **dadurch gekennzeichnet, dass** der anorganische Füllstoff ein siliziumoxid-basierter Füllstoff ist.

4. Mehrkomponentiges Reaktionsharzsystem nach Anspruch 3, **dadurch gekennzeichnet, dass** der siliziumoxid-basierte Füllstoff eine Kieselsäure umfasst.

5. Mehrkomponentiges Reaktionsharzsystem nach Anspruch 4, **dadurch gekennzeichnet, dass** die Kieselsäure eine amorphe Kieselsäure ist, die aus der Gruppe bestehend aus kolloidaler Kieselsäure, Fällungskieselsäure, Kieselgel, pyrogener Kieselsäure, Kieselrauch, Kieselglas (Quarzglas), Kieselgut (Quarzgut) und Skeletten von Radiolarien und Diatomeen in Form von Kieselgur ausgewählt ist.

6. Mehrkomponentiges Reaktionsharzsystem nach einem der vorhergehenden Ansprüche, **dadurch gekennzeichnet, dass** der anorganische Füllstoff eine pyrogene Kieselsäure ist.

7. Mehrkomponentiges Reaktionsharzsystem nach einem der vorhergehenden Ansprüche, **dadurch gekennzeichnet, dass** die radikalisch härtbare Verbindung wenigstens ein Reaktionsharz, wenigstens einen Reaktivverdünner oder eine Mischung aus wenigstens einem Reaktionsharz und wenigstens einem Reaktivverdünner umfasst.

8. Mehrkomponentiges Reaktionsharzsystem nach Anspruch 7, **dadurch gekennzeichnet, dass** das Reaktionsharz eine Verbindung auf Urethan(meth)acrylatbasis, Epoxy(meth)acrylatbasis, ein (Meth)acrylat eines alkoxylierten Bisphenols oder auf Basis weiterer ethylenisch ungesättigter Verbindungen ist.

9. Mehrkomponentiges Reaktionsharzsystem nach einem der vorhergehenden Ansprüche, **dadurch gekennzeichnet, dass** das Härtungsmittel ein Peroxid ist.

10. Mehrkomponentiges Reaktionsharzsystem nach einem der vorhergehenden Ansprüche, **dadurch gekennzeichnet, dass** das Härtungsmittel und das Wasser in Form einer wässrigen Suspension vorliegen.

11. Mehrkomponentiges Reaktionsharzsystem, **dadurch gekennzeichnet, dass** die erste Komponente und/oder die zweite Komponente als weiteren Zusatz mindestens einen weiteren anorganischen oder organischen Zuschlagstoff enthält.

12. Verwendung eines mehrkomponentigen Reaktionsharzsystems nach einem der Ansprüche 1 bis 11 zur chemischen Befestigung von Verankerungsmitteln in Bohrlöchern.

13. Verwendung nach Anspruch 12, **dadurch gekennzeichnet, dass** das Verankerungsmittel eine gewindeformende Schraube, insbesondere Betonschraube, ist.
